(19) Europäisches Patentamt
European Patent Office
Office européen des brevets

(11) Veröffentlichungsnummer: **0 188 688**
**B1**

(12) **EUROPÄISCHE PATENTSCHRIFT**

(45) Veröffentlichungstag der Patentschrift: **16.05.90**

(51) Int. Cl.[5]: **C 04 B 35/48**, C 04 B 35/66, F 27 D 1/16

(21) Anmeldenummer: **85114512.8**

(22) Anmeldetag: **15.11.85**

(54) **Feuerfeste, thixotrope Vibrations-Masse sowie Verfahren und Vorrichtung zur Vibrationszustellung von metallurgischen Gefässen mit dieser Masse.**

(30) Priorität: **14.12.84 DE 3445559**

(43) Veröffentlichungstag der Anmeldung:
**30.07.86 Patentblatt 86/31**

(45) Bekanntmachung des Hinweises auf die Patenterteilung:
**16.05.90 Patentblatt 90/20**

(84) Benannte Vertragsstaaten:
**AT BE DE FR GB IT LU SE**

(56) Entgegenhaltungen:
**EP-A-0 032 602**
**AU-B- 484 640**
**DE-A-2 233 894**
**GB-A-2 024 798**

**Die Akte enthält technische Angaben, die nach dem Eingang der Anmeldung eingereicht wurden und die nicht in dieser Patentschrift enthalten sind.**

(73) Patentinhaber: **Martin & Pagenstecher GmbH**
**Schanzenstrasse 31**
**D-5000 Köln 80 (DE)**

(72) Erfinder: **Klein, Walter**
**Moselstrasse 8**
**D-4300 Essen (DE)**
Erfinder: **Wolf, Irmelin, geb. Bock**
**Rheinhöhe 12**
**D-5411 Urbar (DE)**

(74) Vertreter: **Patentanwaltsbüro Cohausz & Florack**
**Postfach 14 01 20 Schumannstrasse 97**
**D-4000 Düsseldorf 1 (DE)**

**EP 0 188 688 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine feuerfeste, thixotrope, selbsthärtende Vibrations-Masse auf der Basis von Zirkoniumsilikat sowie ein Verfahren zur Vibrationszustellung von metallurgischen Gefäßen, insbesondere von Stahlwerkspfannen mit dieser Masse.

Bei der Zustellung metallurgischer Gefäße unter Vibration der Zustellmasse wird die als Thixotropie bekannte Eigenschaft geeigneter Feuerfestmassen ausgenutzt, unter Einwirkung von Schwingungen flüssig zu werden und bei Beendigung der Schwingungseinwirkungen in einen festen Zustand überzugehen.

Diese Zustelltechnik hat in der Stahlindustrie Eingang gefunden bei der Auskleidung von Abstichrinnen von Hochöfen. Dabei wird die feuerfeste, thixotrope Masse in die Abstichrinne eingefüllt, mit Hilfe einer Vibrationsschablone zum Fließen gebracht, homogenisiert und verdichtet (DE—OS 29 15 598).

Mit dieser Technik sind auch Pfannen in der Gießereiindustrie mit geringen Bauhöhen zugestellt worden, Gießerei 67 (1980), Nr. 21, S. 678/81. Ferner ist vorgeschlagen worden, auch Stahlwerkspfannen auf diese Weise zuzustellen, Nippon Kokan Technical Report, Overseas Nr. 37 (1983), S. 51/53.

Bei der Zustellung von Stahlwerkspfannen überwiegt jedoch die Zustellung entweder mit feuerfesten Steinen oder die monolithische Zustellung durch Stampfen oder Slingern von feuerfesten Massen. Der Grund dürfte darin zu suchen sein, daß an die feuerfeste Zustellung von Stahlwerkspfannen, in denen heute häufig auch metallurgische Behandlungen der Schmelze durchgeführt werden, hohe Anforderungen an ihre Haltbarkeit gestellt werden. Die feuerfeste Zustellung von Stahlwerkspfannen wird überwiegend durch Infiltration und Verschlackung zerstört.

Die flüssigen Schlacken und die Schmelze dringen durch Infiltration in die feuerfeste Zustellung ein, wo Reaktionen zwischen der Schlacke und der Schmelze mit dem feuerfesten Material der Zustellung stattfinden, die eine Zerstörung der feuerfesten Zustellung herbeiführen. Wesentlich für die Schlackenbeständigkeit der feuerfesten Zustellung sind dabei neben der Feuerfestigkeit und dem Mineralaufbau die Dichte der eingesetzen feuerfesten, thixotropen Masse. Die Fachwelt ist bisher offensichtlich der Auffassung gewesen, daß bei Stahlwerkspfannen eine ausreichende Dichte der feuerfesten Zustellung durch Vibration nicht erreicht werden kann.

Hinzu kommt ferner, daß Stahlwerkspfannen mit heute üblichem Fassungsvermögen von 80 bis 320 t Zustellungshöhen von 3 m und mehr aufweisen. Bei diesen Zustellungshöhen bestehen neben dem Problem einer ausreichenden Dichte der Zustellung in der Fachwelt auch Bedenken, daß die vibrierte Zustellung nach der Entfernung der Schablone keine ausreichende Eigenfestigkeit aufweist und in sich zusammenfällt.

Als feuerfeste Masse zur Zustellung von Stahlwerkspfannen ist eine gießbare Masse bekannt, deren Hauptbestandteile Zirkoniumsilikat, eine kieselhaltiges Rohmaterial, z.B. Feuerton, und ein Aluminiumoxidzement sind, wobei der Aluminiumoxidgehalt des gießbaren Materials insgesamt auf 5 bis 1,0 Gew.-% begrenzt ist, DE—AS 32 35 244 und Nippon Kokan Technical Report, Overseas Nr. 37 (1983), S. 51/53.

Nachteilig ist die relativ hohe Porosität von 16,5 bis 21,5 Vol.-% und die hierdurch bedingte nicht ausreichende Schlackenbeständigkeit aufgrund größerer Infiltration. Außerdem neigt die Zustellung, bedingt durch den Feuertonzusatz, zum Schwinden und ist dadurch rißanfällig. Durch die Verwendung von Aluminiumoxidzement enthält die Masse Kristallwasser. Ferner enthält sie freies $SiO_2$. Das ist insofern nachteilig, da $SiO_2$ bei manganhaltigen Schmelzen reduziert wird und eine Aufsizilierung des Stahles erfolgt.

In der DE—OS 29 27 993 ist eine feuerfeste, vibrierbare Masse zur Zustellung metallurgischer Gefäße beschrieben worden, die aus Zirkoniumsilikat, tafelförmigem Aluminiumoxid, calciniertem Kaolin und Phosphorsäure bestehen kann.

Bei diesen Massen ist nachteilig, daß sie nur Schüttdichten zwischen 2,35 und 2,50 g/cm$^3$ aufweisen. Die Schlackenbeständigkeit muß daher als nicht ausreichend betrachtet werden. Der hohe Wassergehalt zwischen 6,4 und 7,1% bringt die Gefahr mit sich, daß die fertig vibrierte Zustellung nach dem Ziehen der Schablone in sich zusammenfällt.

Aus der DE—OS 22 33 894 ist ein Verfahren zum feuerfesten Zustellen von metallurgischen Gefäßen, Gießrinnen und Ausgüssen für Metallschmelzen mit feuerfesten Vibrations-Massen bekannt, bei dem die gesamte erforderliche Menge der Vibrations-Masse zunächst in das auszukleidende Gefäß eingefüllt wird. Anschließend wird ein Formkörper in die Zustellmasse eingedrückt und derart in Vibration versetzt, daß die Zustellmasse zum Fließen gebracht und an dem Gefäßmantel hochgedrückt und verdichtet wird. Der Formkörper ist zu diesem Zweck mit einem Vibrator und einem Gewicht ausgerüstet. Das auszukleidende Gefäß weist zudem Führungen auf, an denen der Formkörper geführt wird und unter dem Einfluß des Gewichtes langsam in die Zustellmasse eindringt. Die Belastung durch das Gewicht muß 1,5 bis 2 t/m$^3$ des Rauminhalts der auszukleidenden Rinne oder des Behälters betragen. Wird unter einer geringeren Belastung als 1,5 t/m$^3$ ausgeformt, so ist ein großer Porositätsunterschied über den Futterquerschnitt, d.h. zwischen jeweils oberer und unterer Partie, zu beobachten und eine homogene Dichte und Struktur nicht zu erreichen. Ist die Belastung größer als 2 t/m$^3$, so senkt sich der innere Formrahmen schon zu Beginn des Rüttelns sehr schnell ab. Auf diese Weise läßt sich aber dieselbe Wirkung wie bei langsamen Absinken unter Druck nicht erreichen, so daß sich keine homogene Zustellung ergibt.

Der vorliegenden Erfindung liegt die Aufgabe zugrunde, eine feuerfeste, thixotrope, selbsthärtende

Vibrations-Masse vorzuschlagen, mit denen die beschriebenen Nachteile der bekannten Massen überwunden werden können. Insbesondere soll die infiltrationshemmende und schlackenabweisende Wirkung der Zustellung sowie ihre Standfestigkeit verbessert und dem Schlackenangriff und seinen Folgen auf das Feuerfest-Material durch geeignete Maßnahmen sowohl hinsichtlich der Struktur (mineralogischer Aufbau) als auch der Textur (Dichte, Gasdurchlässigkeit, Kornverteilung, Porosität) begegnet werden.

Diese Aufgabe wird erfindungsgemäß gelöst durch eine feuerfeste, thixotrope, selbsthärtende Vibrations-Masse auf der Basis von Zirkoniumsilikat, die dadurch gekennzeichnet ist, daß die Masse folgende chemische Zusammensetzung (in Massen-%) hat:

| | |
|---|---|
| 24 bis 29% | $SiO_2$ |
| 10 bis 20% | $Al_2O_3$ |
| 0,2 bis 0,8 % | $P_2O_5$ |
| 0 bis 1,5% | $K_2O+Na_2O+LiO_2$ |
| 0 bis 0,5% | $Fe_2O_3$ |
| 0 bis 0,05% | CaO |
| Rest | $ZrO_2$ |

mit folgender kristallographischer Analyse (in Massen-%):

| | |
|---|---|
| 20 bis 30% | Schmelz-Zirkoniumsilikat-Korund |
| 1 bis 5% | Tonerde |
| 0,1 bis 0,5% | Amorphe Kieselsäure |
| 0,3 bis 1% | Aluminium-Metaphosphat |
| 0,5 bis 4% | Alkalisilikate mit einem Molverhältnis von 1:2 bis 1:4 |
| Rest | Zirkoniumsilikat. |

und einer Kornfraktion von

| | |
|---|---|
| 26 bis 32% | 0 bis 0,06 mm |
| 32 bis 52% | 0,06 bis 0,5 mm |
| 23 bis 38% al Rest | 0,5 bis 3 mm |

Bei einem Molverhältnis größer als 1:2 werden die Alkalisilikate zu hygroskopisch. Bei einem Molverhältnis von kleiner 1:4 werden die Alkalisilikate wasserunlöslich. Das Molverhältnis bezeichnet dabei das Verhältnis der Alkalimetalle zu dem Silikatanteil.

Das verwendete Zirkoniumsilikat weist bevorzugt folgendes Kornspektrum auf:

| | |
|---|---|
| 1 bis 10% | 0,001 bis 0,01 mm |
| 17 bis 25% | 0,01 bis 0,074 mm |
| 65 bis 82% | 0,074 bis 0,5 mm |

Es ist ferner vorteilhaft, als Schmelz-Zirkoniumsilikat-Korund ein Produkt zu verwenden mit folgender chemischer Zusammensetzung (in Massen-%):

| | |
|---|---|
| 13 bis 18% | $SiO_2$ |
| 32 bis 37% | $ZrO_2$ |
| Rest | $Al_2O_3$ |

Das Produkt sollte bevorzugt eine Kornrohdichte von mindestens 3,60 $g/cm^3$ sowie eine Gesamtporosität von 8% und weniger besitzen.

Gemäß einer bevorzugten Ausgestaltung wird als Tonerde reaktive Alpha-Tonerde mit einer mittleren Primärkorngröße unter 3,5 um und einer Korngröße von mindestens 45% unter 2 um verwendet.

Die Anmachwassermenge beträgt in weiterer Ausgestaltung je 100 kg Trockenmasse 2,5 bis 3,5 kg.

Der Masse können vorteilhafterweise 0,5 bis 3 Massen-% Antioxidantien, vorzugsweise in Form von Aluminium- und/oder Siliciumpartikeln, zugesetzt werden.

Auch der Zusatz von pulverförmigen Netzmitteln, vorzugsweise Alkyl-Aryl-Polyoxiäthanol, die die Oberflächenspannung des Anmachwassers reduzieren, kann von Vorteil sein. Der Zusatz beträgt 0,05 bis 0,2 Massen-%.

Eine weitere Aufgabe steht darin, ein geeignetes Verfahren zur Vibrationszustellung von metallurgischen Gefäßen, insbesondere von Stahlwerkspfannen, mit der erfindungsgemäßen feuerfesten, thixotropen Masse vorzuschlagen.

Das erfindungsgemäße Verfahren zur Vibrationszustellung von metallurgischen Gefäßen, insbesondere von Stahlwerkspfannen, mit der vorgeschlagenen feuerfesten, thixotropen, selbsthärtenden Masse ist dadurch gekennzeichnet, daß die Bestandteile der Masse in trockenem Zustand zunächst intensiv gemischt

werden. Vor Beginn der Vibration wird die Anmachwassermenge zugegeben und die feuchte Masse erneut gemischt. Dann wird diese unter ständiger Vibration in den Raum zwischen einer eingebrachten Schablone und der Pfannenwand eingefüllt und die Zustellung nach dem Ausschalen aufgeheizt.

Gemäß einer bevorzugten Ausgestaltung wird die Anmachwassermenge mit einer Genauigkeit von mindestens 0,1% zugegeben und die feuchte Masse max. 4 Minuten gemischt.

Nach dem Ausschalen wird die Zustellung bevorzugt auf 150°C aufgeheizt, mit einer max. Geschwindigkeit von 8°C/h.

Die Erfindung wird nachstehend anhand von Ausführungsbeispielen erläutert.

Beispiel 1:

Eine erfindungsgemäße thixotrope selbsthärtende Vibrationsmasse zur Zustellung einer Stahlgießpfanne mit einem Fassungsvermögen von 85 t wies folgende feuerfeste Komponenten auf:

| | |
|---|---|
| 36 Gew.-% | Zirkoniumsilikat mit einer Korngröße 0—0,5 mm |
| 16 Gew.-% | Zirkoniumsilikatmehl mit einer Korngroße 0—0,074 mm |
| 10 Gew.-% | Zirkoniumsilikatmehl mit einer Korngröße 0,001—0,01 mm |
| 30 Gew.-% | Schmelzzirkoniumsilikat-Korund mit einer Korngröße 0—4 mm |
| 5 Gew.-% | Alpha-Tonerde mit einer mittleren Primär-Korngröße kleiner als 3,5 µm |
| 0,5 Gew.-% | amorphe Kieselsäure mit einer Korngröße kleiner als 1 µm. |

Das eingesetzte Schmelz-Zirkoniumsilikat-Korund hatte folgende chemische Zusammensetzung (in Massen-%):

| | |
|---|---|
| 16% | $SiO_2$ |
| 48% | $Al_2O_3$ |
| 36% | $ZrO_2$ |

die Kornrohdichte beträgt 3,65 g/cm$^3$ und die Gesamtporosität 7%.

Die feuerfesten Komponenten wurden in einem Mischer unter Zusatz von

| | |
|---|---|
| 0,5 Gew.-% | Aluminium-Metalphosphat-Pulver |
| 1 Gew.-% | Natrium-Silikat mit einem Mol-Verhältnis von 1:2,5 |
| 0,5 Gew.-% | Aluminiumpulver als Antioxidant, |
| 0,05 Gew.-% | Waschaktivsubstanz als Netzmittel |

in trockenem Zustand intensiv gemischt und in Plastiksäcken verpackt.

Die chemische Analyse der Masse lautet (in Massen-%) wie folgt:

| | |
|---|---|
| 25% | $SiO_2$ |
| 20% | $Al_2O_3$ |
| 0,35% | $P_2O_5$ |
| 0,8% | $Na_2O$ |
| Rest | $ZrO_2$ |

Die Kornfraktion lag im Bereich des Anspruchs 2.

Die Masse ist tonfrei und zementfrei und weist daher kein Kristallwasser auf; der freie $SiO_2$-Gehalt liegt unter 0,5 Gew.-%. In einer mit dieser Masse zugestellten Pfanne können Entschwefelungsbehandlungen mit kalkhaltigen Substanzen mit verbesserten Ergebnissen vorgenommen und hochmanganhaltige Stähle vergossen werden.

Im Stahlwerk wird die trockene Masse in Chargen von je 2 t in einen Zwangsmischer gegeben und unter Zusatz von 3,4 kg Anmachwasser je 100 kg Trockenmasse intensiv gemischt. Die exakte Wasserdosierung erfolgt mit einer elektrischen Impulssteuerung mit einer Genauigkeit von 0,1%. Die Mischzeit nach der Wasserzugabe beträgt 4 Minuten. Anschließend wird die Masse aus der Mischvorrichtung ausgetragen und zur zuzustellenden Stahlgießpfanne transportiert.

Das Einfüllen der Mischung in den Raum zwischen einer eingebrachten Schablone und der Pfannenwand und das Vibrieren geschieht innerhalb einer Zeit von 4 Minuten.

Nach dem Vibrieren wird die Schablone gezogen. Die Zustellung wird anschließend mit einer Geschwindigkeit von 8°C/h auf 150°C aufgeheizt und anschließend auf Betriebstemperatur gebracht.

Die fertige Zustellung weist folgende Eigenschaften auf:

| | |
|---|---|
| Vibrationsdichte (Rohdichte) | 3,6 g/cm$^3$ |
| Offene Porosität | 12 Vol.-% |
| Gasdurchlässigkeit | 0,4 nPm |
| Thermische Dehnung bis 1000°C | 0,4% |
| Kaltdruckfestigkeit nach 1000°C | 100 N/mm$^2$ |

Bei der Behandlung von Edelstahlschmelzen in der ausgekleideten Pfanne betrug die Haltbarkeit der Zustellung 78 Chargen. Dies ist eine 1,75-fache Haltbarkeit gegenüber einer Zustellung mit einer gleichartigen, jedoch gestampften Masse.

Beispiel 2

Eine erfindungsgemäße thixotrope, selbsthärtende Vibrationsmasse zur Zustellung einer Stahlgießpanne mit einem Fassungsvermögen von 180 t weist folgende feuerfeste Komponenten auf (in Massen-%):

| | |
|---|---|
| 50% | Zirkoniumsilikat mit einer Korngröße 0—0,5 mm, |
| 15% | Zirkoniumsilikatmehl mit einer Korngröße 0—0,074 mm, |
| 10% | Zirkoniumsilikatmehl mit einer Korngröße 0,001—0,01 mm, |
| 20% | Schmelzzirkoniumsilikat-Korund mit einer Korngröße 0—4 mm, |
| 2% | Alpha-Tonerde mit einer mittleren Primär-Korngröße kleiner als 3,5 µm, |
| 0,2 | amorphe Kieselsäure mit einer Korngröße kleiner als 1 µm. |

Das eingesetzte Schmelz-Zirkoniumsilikat-Korund weist folgende chemische Zusammensetzung (in Massen-%) auf:

16% $SiO_2$  48% $Al_2O_3$,  36% $ZrO_2$;

die Kornrohdichte beträgt 3,65 g/cm$^3$, die Gesamtporosität 7%.

Die feuerfesten Komponenten werden in einem Zwangsmischer unter Zusatz von (in Massen-%)

| | |
|---|---|
| 0,5% | Al-Metaphosphat-Pulver, |
| 1,3% | Natrium-Silikat mit einem Mol-Verhältnis von 1:3,3, |
| 0,9% | Aluminiumpulver als Antioxidant, |
| 0,1% | Waschaktivsubstanz als Netzmittel, |

im trockenen Zustand intensiv gemischt und in Plastiksäcken verpackt. Die chemische Analyse der Masse lautet (in Massen-%):

| | |
|---|---|
| 27% | $SiO_2$ |
| 13% | $Al_2O_3$ |
| 0,35% | $P_2O_5$ |
| 0,6% | $Na_2O$ |
| Rest | $ZrO_2$ |

Die Kornfraktion entsprach der gemäß Anspruch 2.

Auch diese Masse ist tonfrei und zementfrei. Der freie $SiO_2$-Gehalt liegt unter 0,5%.

Im Stahlwerk wird die trockene Masse in Chargen von je 2 t in einen Zwangsmischer gegeben und unter Zusatz von 3,5 kg Anmachwasser je 100 kg Trockenmasse intensiv gemischt. Die exakte Wasserdosierung erfolgt mit einer elektrischen Impulssteuerung mit einer Genauigkeit von 0,1%. Die Mischzeit nach der Wasserzugabe beträgt 4 Minuten. Anschließend wird die Masse aus der Mischvorrichtung ausgetragen und zur zuzustellenden Stahlgießpfanne transportiert. Das Einfüllen der Mischung in den Raum zwischen einer eingebrachten Schablone und der Pfannenwand und das Vibrieren geschieht innerhalb einer Zeit von 4 Minuten.

Nach dem Vibrieren wird die Schablone gezogen. Die Zustellung wird anschließend mit einer Geschwindigkeit von 8°C/h auf 150°C aufgeheizt und anschließend auf Betriebstemperatur gebracht.

Die fertige Zustellung weist folgende Eigenschaften auf:

| | |
|---|---|
| Vibrationsdichte (Rohdichte) | 3,65 g/cm$^3$ |
| Offene Porosität | 11 Vol.-% |
| Gasdurchlässigkeit | 0,4 nPm |
| Thermische Dehnung bis 1000°C | 0,4% |
| Kaltdruckfestigkeit nach 1000°C | 110 N/mm$^2$ |

Bei der Behandlung von Qualitätsstahlschmelzen mit Stahlentschwefelung betrug die Haltbarkeit der Zustellung 70 Chargen; dies ist eine 1,2-fache Haltbarkeit gegenüber einer Zustellung mit einer tonerdereichen vibrierten Masse mit größerer Porosität.

In der Zeichnung ist eine Ausführungsform einer Vorrichtung zur Durchführung des erfindungsgemäßen Verfahrens schematisch dargestellt.

Die in Plastiksäcken angelieferte trockene Vibrationsmasse wird mit einem Deckenkran 2 über den Trichter 4 in den Zwangsmischer 3 geschüttet, der mit einer Wasserdosieranlage 5 ausgerüstet ist. Die Masse wird in dem Zwangsmischer 3 intensiv gemischt, wobei die Anmachwassermenge mit Hilfe der Wasserdosieranlage 5 mit einer Genauigkeit von mindestens 0,1% zugegeben wird.

Nach dem Mischen und Anfeuchten wird die Masse mit Hilfe des Austragsförderbandes 6 aus dem

Zwangsmischer 3 ausgetragen und mit Hilfe des Schrägaufzuges 7 in das Silo 8 befördert. Aus dem Silo 8 gelangt die Masse auf ein Transportförderband 9, das an seinem Ende mit einem rotierenden Bandförderer 10 ausgerüstet ist.

In der zuzustellenden Stahlwerkspfanne 11 befindet sich die Vibrationsschablone 12 mit den Rüttlern 13. Die Schablone 12 ruht auf einem ringförmigen Gummipuffer 16, während die obere Abfederung zu einem Querhaupt 14 durch mehrere obere und untere Gummipuffer 15 bewirkt wird.

Das Querhaupt 14 ist durch Befestigungen 17 mit der Pfanne verbunden. Der rotierende Bandförderer 10 befördert die Vibrationsmasse in den Spalt zwischen Pfanne 11 und der Vibrationsschablone 12. Nach dem Einschalten der Rüttler 13 wird die thixotrope Vibrationsmasse flüssig und füllt den Raum zwischen der Pfanne 11 und der Schablone 12 homogen aus. Nach Beendigung des Einfüllvorganges und nach Abschalten der Rüttler geht die zugestellt feuerfeste Vibrationsmasse in einen feuerfesten Zustand über. Die Wärmebehandlung nach dem Ziehen der Vibrationsschablone 12 ist in den Ausführungsbeispielen beschrieben worden.

**Patentansprüche**

1. Feuerfeste thixotrope selbsthärtende Vibrations-Masse auf der Basis von Zirkoniumsilikat zur Erzielung einer Vibrationsdichte von mindestens 3,6 g/cm$^3$, gekennzeichnet durch folgende chemische Zusammensetzung (in Massen-%):

| | |
|---|---|
| 24 bis 29% | $SiO_2$ |
| 10 bis 20% | $Al_2O_3$ |
| 0,2 bis 0,8% | $P_2O_5$ |
| 0 bis 1,5% | $K_2O+Na_2O+LiO_2$ |
| 0 bis 0,5% | $Fe_2O_3$ |
| 0 bis 0,05% | CaO |
| Rest | $ZrO_2$ |

und folgender kristallographischer Analyse (in Massen-%):

| | |
|---|---|
| 20 bis 30% | Schmelz-Zirkoniumsilikat-Korund |
| 1 bis 5% | Tonerde |
| 0,1 bis 0,5% | Amorphe Kieselsäure |
| 0,3 bis 1% | Aluminiummetaphosphat |
| 0,5 bis 4% | Alkalisilikate mit einem Molverhältnis von 1:2 bis 1:4 |
| Rest | Zirkoniumsilikat |

und folgender Kornfraktion:

| | |
|---|---|
| 26 bis 32% | bis 0,06 mm |
| 32 bis 52% | 0,06 bis 0,5 mm |
| 23 bis 38% als Rest | 0,5 bis 3 mm. |

2. Masse nach Anspruch 1, dadurch gekennzeichnet, daß das Zirkoniumsilikat folgendes Kornspektrum aufweist:

| | |
|---|---|
| 1 bis 10% | 0,001 bis 0,01 mm |
| 17 bis 25% | 0,01 bis 0,074 mm |
| 65 bis 82% | 0,074 bis 0,5 mm |

3. Masse nach Anspruch 1 oder 2, dadurch gekennzeichnet, daß der Schmelz-Zirkoniumsilikat-Korund folgende chemische Zusammensetzung (in Massen %) hat.

| | |
|---|---|
| 13 bis 18% | $SiO_2$ |
| 32 bis 37% | $ZrO_2$ |
| Rest | $Al_2O_3$ |

und eine Kornrohdichte von mindestens 3,60 g/cm$^3$ sowie eine Gesamtporosität von 8% und weniger besitzt.

4. Masse nach einem der Ansprüche 1 bis 3, dadurch gekennzeichnet, daß als Tonerde reaktive α-Tonerde mit einer mittleren Primärkorngröße unter 3,5 µm und einer Korngröße von mindestens 45% unter 2 µm und als Kieselsäure kolloidale Kieselsäure mit einer Korngröße unter 1 µm verwendet wird.

5. Masse nach einem der Ansprüche 1 bis 4, dadurch gekennzeichnet, daß die Anmachwassermenge je 100 kg Trockenmasse 2,5 bis 3,5 kg beträgt.

6. Masse nach einem der Ansprüche 1 bis 5, dadurch gekennzeichnet, daß sie 0,5 bis 3 Massen-% Antioxidantien, vorzugsweise in Form von Aluminium- oder Silicium-Partikeln, enthält.

7. Masse nach einem der Ansprüche 1 bis 6, dadurch gekennzeichnet, daß sie 0,05 bis 0,2 Messen-% pulverförmige Netzmittel, vorzugsweise Alkyl-Aryl-Polyoxiäthanol enthält.

8. Verfahren zur Vibrationszustellung von metallurgischen Gefäßen, insbesondere von Stahlwerkspfannen mit einer feuerfesten, thixotropen Masse nach einem der Ansprüche 1 bis 7, dadurch gekennzeichnet, daß die Bestandteile der Masse im trockenen Zustand intensiv gemischt werden, daß vor Beginn der Vibration die Anmachwassermenge zugegeben, die feuchte Masse gemischt, diese unter ständiger Vibration in den Raum zwischen einer eingebrachten Schablone und der Pfannenwand eingefüllt und die Zustellung nach dem Ausschalen aufgeheizt wird.

9. Verfahren nach Anspruch 8, dadurch gekennzeichnet, daß die Anmachwassermenge mit einer Genauigkeit von mindestens 0,1% zugegeben und die feuchte Masse maximal 4 Minuten gemischt wird.

10. Verfahren nach Anspruch 8 und 9, dadurch gekennzeichnet, daß die Zustellung nach dem Ausschalen auf 150°C mit einer max. Geschwindigkeit von 8°C/h aufgeheizt wird.

**Revendications**

1. Masse vibratoire réfractaire thixotrope autodurcissante à base de silicate de zirconium pour obtenir une densité vibratoire d'au moins 3,6 g/cm³, caractérisée par la composition chimique suivante (en % en masse):

| | |
|---|---|
| 24 à 29% | $SiO_2$ |
| 10 à 20% | $Al_2O_3$ |
| 0,2 à 0,8% | $P_2O_5$ |
| 0 à 1,5% | $K_2O+Na_2O+LiO_2$ |
| 0 à 0,5% | $Fe_2O_3$ |
| 0 à 0,05% | CaO |
| Reste | $ZrO_2$ |

et par l'analyse cristallographie suivante (en % en masse):

| | |
|---|---|
| 20 à 30% | de corindon-silicate de zirconium fondu |
| 1 à 5% | d'alumine |
| 0,1 à 0,5% | d'acide silicique amorphe, |
| 0,3 à 1% | de métaphosphate d'aluminium, |
| 0,5 à 4% | de silicates alcalins avec un rapport molaire de 1:2 à 1:4 |
| Reste | silicate de zirconium. |

et la fraction granulométrique suivante:

| | |
|---|---|
| 26 à 32% | jusqu'à 0,06 mm |
| 32 à 52% | 0,06 à 0,5 mm |
| 23 à 38% en tant que reste | 0,5 à 3 mm. |

2. Masse selon la revendication 1, caractérisée par le fait que le silicate de zirconium présente le spectro granulométrique suivant:

| | |
|---|---|
| 1 à 10% | 0,001 à 0,01 mm |
| 17 à 25% | 0,01 à 0,074 mm |
| 65 à 82% | 0,074 à 0,5 mm. |

3. Masse selon la revendication 1 ou 2, caractérisée par le fait que le corindon-silicate de zirconium fondu a la composition chimique suivante (en % en masse):

| | |
|---|---|
| 13 à 18% | $SiO_2$ |
| 32 à 37% | $ZrO_2$ |
| Reste | $Al_2O_3$ |

et possède une masse volumique apparente de grains de moins de 3,60 g/cm³, de même qu'une porosité globale de 8% et moins.

4. Masse selon l'une des revendications 1 à 3, caractérisée par le fait qu'on utilise, comme alumine, de l'alumine-α réactive avec une grosseur de grains primaire moyenne en-dessous de 3,5 µm et une grosseur de grains d'au moins 45% en-dessous de 2 µm, et, comme acide silicique, de l'acide silicique colloïdal avec une grosseur de grains inférieure à 1 µm.

5. Masse selon l'une des revendications 1 à 4, caractérisée par le fait que la quantité d'eau de délayage, pour 100 kg de masse sèche s'élève à 2,5 à 3,5 kg.

6. Masse selon l'une des revendications 1 à 5, caractérisée par le fait qu'elle contient de 0,5 à 3% en masse d'anti-oxygènes, de préférence sous la forme de particules d'aluminium ou de silicium.

7. Masse selon l'une des revendications 1 à 6, caractérisée par le fait qu'elle contient de 0,05 à 0,2% en masse d'agent mouillant pulvérulent, de préférence, un alkyl-aryl-polyoxyéthanol.

8. Procédé pour la réparation vibratoire de récipients métallurigiques, en particulier de poches de coulée d'aciérie, avec une masse réfractaire thixotrope selon l'une des revendications 1 à 7, caractérisé par le fait que les composants de la masse sont mélangés intensivement à l'état sec, qu'avant le début de la vibration, la quantité d'eau de délayage est ajoutée, la masse humide est mélangée, celle-ci est introduite sous vibration permanente dans l'espace entre un gabarit introduit et la paroi de la poche de coulée, et al réparation est chauffée après le décoffrage.

9. Procédé selon la revendication 8, caractérisé par le fait que la quantité d'eau de délayage est ajoutée avec une précision d'au moins 0,1% et la masse humide est mélangée pendant au plus 4 minutes.

10. Procédé selon l'une des revendications 8 et 9, caractérisé par le fait que la réparation est chauffée après le décoffrage jusqu'à 150°C, avec une vitesse maximale de 8°C/h.

**Claims**

1. A thixotropic self-curing refractory vibration mass based on zirconium silicate for achieving a vibration density of at least 3.6 g/cm$^3$, characterized by the following chemical composition (in % by weight):

| | |
|---|---|
| 24 to 29% | $SiO_2$ |
| 10 to 20% | $Al_2O_3$ |
| 0.2 to 0.8% | $P_2O_5$ |
| 0 to 1.5% | $K_2O+Na_2O+LiO_2$ |
| 0 to 0.5% | $Fe_2O_3$ |
| 0 to 0.05% | CaO |
| rest | $ZrO_2$ |

and the following crystallographic analysis (in % by weight):

| | |
|---|---|
| 20 to 30% | fused zirconium silicate/corundum |
| 1 to 5% | alumina |
| 0.1 to 0.5% | amorphous silica |
| 0.3 to 1% | aluminum metaphosphate |
| 0.5 to 4% | alkalisilicate with a molar ratio of 1:2 to 1:4 |
| rest | zirconium silicate |

and having the following particle size spectrum:

| | |
|---|---|
| 26 to 32% | 0 to 0.06 mm |
| 32 to 52% | 0.06 to 0.5 mm |
| 23 to 38% as rest | 0.5 to 3 mm. |

2. A refractory mass according to claim 1, wherein the zirconium silicate has the following particle size spectrum:

| | |
|---|---|
| 1 to 10% | 0.001 to 0.01 mm |
| 17 to 25% | 0.01 to 0.074 mm |
| 65 to 82% | 0.074 to 0.5 mm. |

3. A refractory mass according to claim 1 or 2, wherein the fused zirconium silicate/corundum has the following chemical composition (in % by weight):

| | |
|---|---|
| 13 to 18% | $SiO_2$ |
| 32 to 37% | $ZrO_2$ |
| rest | $Al_2O_3$ |

and a total porosity of 8% or less, and the particles possess a bulk density of at least 3.60 g/cm$^3$.

4. A refractory mass according to any of claims 1 to 3, wherein the alumina is reactive α-alumina which has a mean primary particle size of less than 3.5 μm and in which at least 45% of the particles are less than 2 μm in size, and the silica used is colloidal silica having a particle size of less than 1 μm.

5. A refractory mass according to any of claims 1 to 4, wherein water is admixed in an amount of 2.5 to 3.5 kg per 100 kg of the dry material.

6. A refractory mass according to any of claims 1 to 5, wherein antioxidants, preferably aluminum or silicon particles, are admixed in an amount of 0.5 to 3% by weight.

7. A refractory mass according to any of claims 1 to 6, wherein pulverulent wetting agents, preferably alkyl-arylpolyoxyethanol, is admixed in an amount of 0.05 to 0.2% by weight.

8. A process for lining metallurgical vessels, in particular ladles in steel plants, with a thixotropic refractory mass according to any one of claims 1 to 7 wherein the components of the material are mixed thoroughly in the dry state, the amount of water for mixing is added while mixing is continued, the mass is introduced under continuous vibration, into the space between a former inserted in the ladle and the ladle wall, and, after removal of the former the lining is heated.

9. A process according to claim 8, wherein the amount of water for mixing is added with a precision of at least 0,1%, and the moist material is mixed for not more than 4 minutes.

10. A process according to claim 8, wherein after removal of the former, the lining is heated to 150°C at a rate of not more than 8°C/hour.

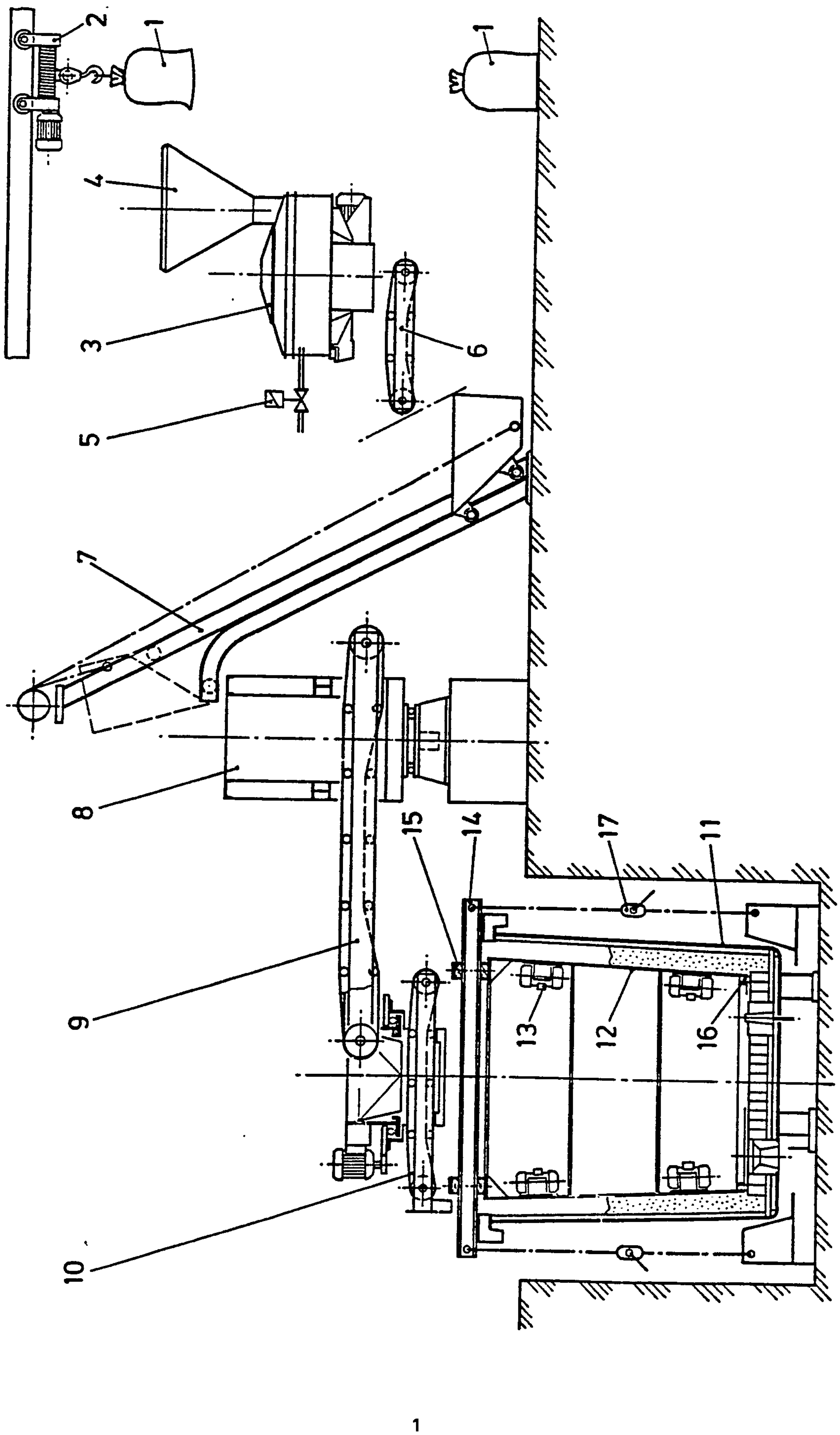
1
2
1
4
3
5
6
7
8
9
10
15
14
17
11
13
12
16